# FASCICULE DE BREVET EUROPEEN

(11) **EP 1 152 509 B1**
(45) Date de publication et mention de la délivrance du brevet: **04.03.2009**
(21) Numéro de dépôt: 01401046.6
(22) Date de dépôt: 25.04.2001
(51) Int. Cl.: H02G 5/06

(54) **Système de transport et de distribution d'énergie électrique**
Elektrisches Energieübertragungs- und verteilungssystem
Electricity transport and distribution system

(30) Priorité: 04.05.2000 FR 0005837
(43) Date de publication de la demande: 07.11.2001
(73) Titulaire: Schneider Electric Industries SAS, 92500 Rueil-Malmaison (FR)
(72) Inventeur: Pierrot, Henri, 21000 Dijon (FR)

(56) Documents cités:
- FR-A- 2 694 845
- US-A- 3 376 377

## Description

La présente invention concerne un système de transport et de distribution d'énergie électrique basse tension, tel que des canalisations électriques préfabriquées, comprenant des éléments de transport constitués de plusieurs conducteurs parallèles, isolés et plaqués les uns aux autres, associés à des éléments de distribution, constitués de plusieurs conducteurs parallèles et espacés les uns des autres.

Les systèmes de transport et de distribution d'énergie électrique par canalisations électriques préfabriquées sont bien connus. Ils ont pour fonction d'une part le transport de l'énergie électrique d'un point à un autre dans une installation, par exemple d'un tableau électrique à un autre tableau électrique, et d'autre part la distribution de cette énergie électrique pour les différents récepteurs situés de façon répartie dans cette installation, en proposant des points de connexion fixes et rapprochés tout au long des canalisations, par exemple de l'ordre d'un ou deux points de connexion par mètre. Les récepteurs sont alors alimentés au moyen de boîtiers de dérivation connectés à ces points de connexion. De plus il est souvent demandé que la pose et la dépose d'un boîtier de dérivation puisse se faire aisément sans couper l'alimentation électrique des canalisations suivant un type de connexion appelé ci-après "plug-in".

Il existe une première technologie de réalisation d'une telle canalisation électrique préfabriquée dans laquelle les barres conductrices de la canalisation sont parallèles, isolées et plaquées les unes contre les autres dans une enveloppe métallique. Cette première technologie permet de réduire la réactance de la canalisation électrique préfabriquée et procure un meilleur échange thermique avec l'extérieur notamment pour de fortes intensités, telles que celles supérieures à 1000A. Dans une seconde technologie, les barres conductrices sont parallèles mais espacées les unes des autres dans l'enveloppe. Cette seconde technologie accroît la réactance de la canalisation électrique et rend l'échange thermique avec l'extérieur moins efficace, par contre elle permet beaucoup plus facilement de poser et de déposer des boîtiers de dérivation suivant une connexion de type "plug-in". La première technologie est donc bien adaptée pour la fonction transport de l'énergie électrique alors que la seconde technologie est mieux adaptée à la fonction distribution de l'énergie électrique.

Une solution consiste donc à utiliser des barres conductrices isolées et plaquées les unes contre les autres mais présentant des épanouissements à des intervalles réguliers et rapprochés pour proposer des connexions de type "plug-in". Cependant dans cette solution, la dissipation de la chaleur vers l'extérieur perd de son efficacité et le coût d'une telle canalisation devient vite élevé dans les fortes puissances notamment en raison de la difficulté à isoler et plier de grosses barres conductrices à des intervalles rapprochés. Dans la solution présentée dans le brevet US 4886468, une canalisation électrique est constituée de barres conductrices isolées, plaquées les unes contre les autres et présentant à intervalles réguliers des excroissances conductrices, transversales à l'axe longitudinal des barres et s'écartant les unes des autres pour permettre une connexion de type "plug-in" de boîtiers de dérivation. La dissipation de la chaleur le long de la canalisation est alors bien effectuée puisque les barres restent plaquées mais un tel système reste complexe à fabriquer et à isoler. De plus par construction, ces solutions proposent systématiquement des points de connexion sur toute la longueur de la canalisation même dans les zones de l'installation où l'utilisateur n'a aucun boîtier de dérivation à installer, ce qui peut lui amener un surcoût important par rapport à son besoin réel.

Le document US3,376,377 décrit un système de canalisations électriques de puissance comportant des conducteurs de transport plaqués les uns contre les autres et connectés à d'autres conducteurs de transport au moyen d'épanouissements. Des conducteurs de dérivation peuvent remplacer les épanouissements de façon à être raccordés aux conducteurs de transport, sans adjonction de moyens de protection.

Le but de l'invention est donc de proposer un système de transport et de distribution de l'énergie électrique cumulant les avantages techniques et économiques des deux technologies et donc assurant d'une part la fonction transport avec une faible impédance des circuits, de faibles pertes et une bonne dissipation thermique et d'autre part la fonction distribution avec des possibilités de connexion de type "plug-in", tout en optimisant le nombre de ces possibilités de connexions en fonction des réels besoins de l'utilisateur.

Ce but est atteint par un système de transport et de distribution d'énergie électrique présentant les caractéristiques énoncées à la revendication 1.

La section des conducteurs de distribution est inférieure à la section des conducteurs de transport. Un nombre limité de trappes de dérivation, espacées par des intervalles, sont aménagées le long des éléments de distribution, permettant d'installer des boîtiers de dérivation par des connexions de type "plug-in". La somme des courants consommés par des récepteurs raccordés à des boîtiers de dérivation d'un élément de distribution peut être supérieure au courant nominal parcourant uniformément la longueur d'un élément de distribution.

Les caractéristiques et avantages de l'invention vont apparaître dans la description détaillée qui suit en se référant à un mode de réalisation donné à titre d'exemple et représenté par les dessins annexés sur lesquels :
- la figure 1 représente un exemple de schéma général d'un système conforme à l'invention comportant trois éléments de transport, un coffret de dérivation et deux éléments de distribution raccordés à leurs deux extrémités,
- la figure 2 détaille un mode de réalisation d'un bloc de jonction reliant deux éléments de transport dotés de trois conducteurs,
- la figure 3 montre une vue en coupe du bloc de jonction de la figure 2 selon un axe X-X,
- la figure 4 représente un autre exemple de schéma d'un système conforme à l'invention,
- la figure 5 montre le schéma d'un système comprenant un élément de distribution raccordé par une seule de ses extrémités,
- les figures 6 et 7 illustrent la répartition des courants dans un système conforme à l'invention,
- la figure 8 représente un autre mode de réalisation d'un bloc de jonction.

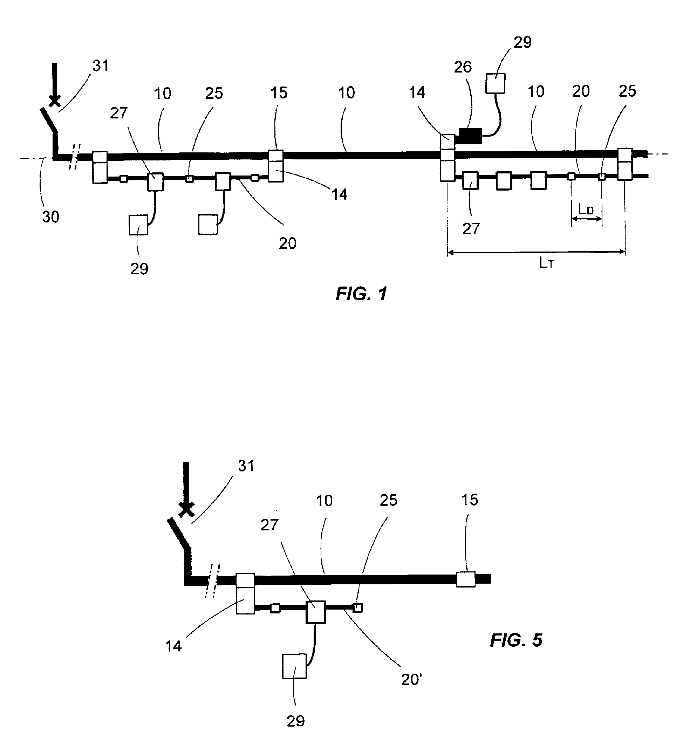

Dans la figure 1, le système de transport et de distribution d'énergie électrique comprend plusieurs éléments de transport 10, tels que des éléments de canalisations électriques préfabriquées. Chaque élément de transport 10 est d'une longueur déterminée L_{T}, par exemple égale à cinq mètres, et renferme, dans une enveloppe tubulaire rigide, plusieurs conducteurs de transport 11, qui peuvent être des barres métalliques ou des câbles, parallèles, isolés les uns des autres et plaqués les uns contre les autres. Ces éléments de transport 10 présentent à leurs extrémités 12 un épanouissement des conducteurs de transport 11 permettant de les assembler entre eux par aboutement au moyen d'un bloc de jonction 15. Ce bloc de jonction 15 assure la connexion électrique par éclissage deux à deux des différents conducteurs respectifs 11 de deux éléments de transport 10 adjacents. Chaque bloc de jonction 15 peut également incorporer au moins un dispositif de dérivation 14, de façon à assurer la jonction entre deux éléments de transport ainsi que la dérivation d'éléments de distribution.

Le système de transport et de distribution d'énergie électrique comporte également un ou plusieurs éléments de distribution 20,20', qui peuvent être des éléments de canalisations électriques préfabriquées, et qui renferment, dans une enveloppe tubulaire rigide, plusieurs conducteurs de distribution 21, par exemple des barres métalliques ou des câbles, parallèles et espacés les uns des les autres. Ces éléments de distribution 20,20' sont montés en dérivation des éléments de transport 10, chaque élément de distribution ayant au moins une de ses extrémités 22 directement raccordée à un dispositif de dérivation 14 au niveau d'un bloc de jonction 15.

La figure 1 montre des éléments de distribution 20 raccordés par leurs deux extrémités 22 à des dispositifs de dérivation 14. Dans ce cas, pour des raisons évidentes de construction, un élément de distribution 20 est préférentiellement parallèle à un élément de transport 10.

La figure 5 montre un élément de distribution 20' raccordé par une seule de ses extrémités 22 à un dispositif de dérivation 14. Dans ce cas, l'élément de distribution 20' est indifféremment soit dirigé parallèlement à un élément de transport 10, comme indiqué en figure 5, soit dirigé suivant une autre direction, par exemple perpendiculairement à un élément de transport 10.

Chaque élément de distribution 20,20' possède de façon répartie, à des intervalles L_{D} qui peuvent être réguliers ou non, par exemple des intervalles inférieurs ou égaux à un mètre, un nombre limité de points de connexion appelés trappes de dérivation 25 permettant d'installer des boîtiers de dérivation 27 par des connexions de type "plug-in", c'est-à-dire une connexion autorisant la pose et la dépose d'un boîtier de dérivation 27 sans couper l'alimentation électrique du système de transport et de distribution. Ce type de connexion est connu et présent dans de nombreux éléments de distribution, du genre canalisations électriques préfabriquées et son mode de réalisation ne sera pas détaillé ici. L'intervalle L_{D} entre deux trappes de dérivation 25 adjacentes est inférieur à la longueur L_{T} des éléments de transport 10.

Les boîtiers de dérivation 27 servent à alimenter des récepteurs 29 situés en aval. Ceux-ci peuvent être ainsi répartis avantageusement sur toute la longueur d'un élément de distribution 20,20' pour une meilleure répartition des courants consommés. De plus, il est facile de modifier l'implantation des récepteurs 29 raccordés aux boîtiers de dérivation 27, de rajouter ou d'enlever certains boîtiers de dérivation sans arrêter le fonctionnement des autres récepteurs.

Par ailleurs, lorsqu'un utilisateur désire installer un récepteur 29 de forte puissance, par exemple de puissance supérieure ou égale au calibre d'un élément de distribution, ou lorsqu'il n'a qu'un seul récepteur à installer sur toute la longueur d'un élément de transport 10, il garde la possibilité de connecter ce récepteur 29 au moyen d'un simple coffret de dérivation 26 raccordé à un dispositif de dérivation 14, comme indiqué en figure 1, ce raccordement se faisant de façon fixe et hors tension. Le coffret de dérivation 26 inclut ses propres moyens usuels de protection électrique contre les surcharges en courant.

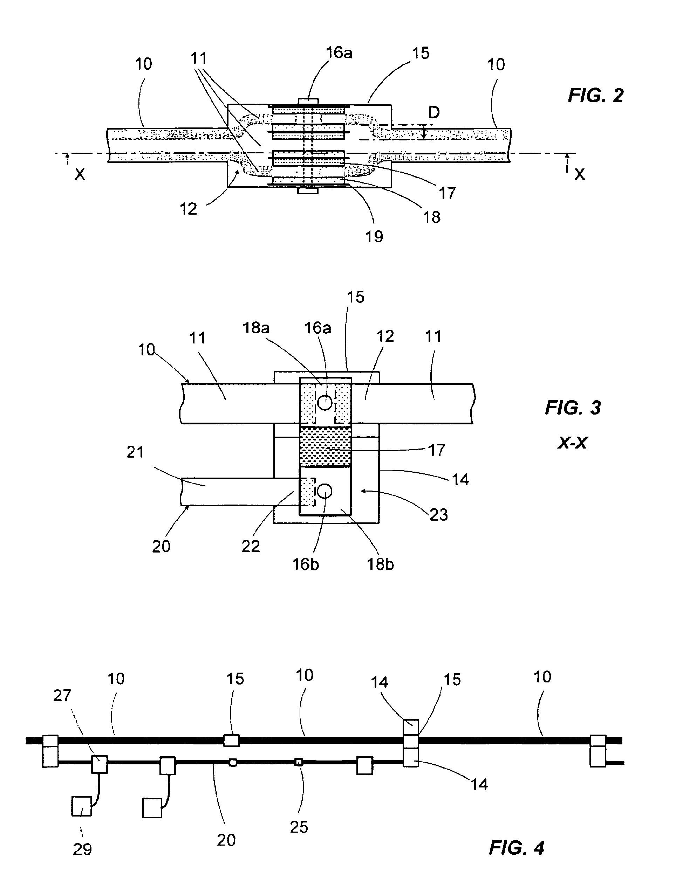

Dans un premier mode de réalisation présenté en figure 2, les éléments de transport comportent trois conducteurs de transport 11 qui présentent un épanouissement à chacune de leurs extrémités 12 pour faciliter l'éclissage au niveau d'un bloc de jonction 15. Cet épanouissement engendre une distance D entre deux conducteurs 11 adjacents. De préférence, la valeur de cette distance D est choisie de façon à être sensiblement égale à l'écartement existant entre les conducteurs 21 des éléments de distribution 20,20' dans le but de simplifier le dispositif de dérivation 14. Le bloc de jonction comprend dans un boîtier 15 plusieurs paires de plaques conductrices 17,18, chaque paire entourant les extrémités dénudées d'un conducteur de transport 11 et d'un conducteur de distribution 21 correspondant. L'isolation entre deux paires de plaques conductrices 17,18 d'une part et entre les plaques conductrices 17,18 et le boîtier 15 d'autre part, est assuré par un dispositif d'isolation 19 adéquat.

En référence à la figure 3, les premières plaques conductrices 17 et les dispositifs d'isolation 19 du bloc de jonction 15 sont prolongés pour former un dispositif de dérivation 14 incorporé au bloc de jonction. Les premières plaques conductrices 17 assurent la connexion électrique entre un conducteur de transport 11 et un conducteur de distribution 21 correspondant. Les secondes plaques conductrices 18 sont constituées de deux demi-plaques 18a,18b distinctes, la demi-plaque 18a assurant la fixation et la connexion électrique des conducteurs de transport 11 et la demi-plaque 18b assurant la fixation et la connexion électrique des conducteurs de distribution 21. Un tel dispositif de dérivation 14 offre ainsi deux emplacements de dérivation 23 disponibles, chaque emplacement pouvant accueillir l'extrémité 22 d'un élément de distribution 20,20' comme indiqué en figure 3, mais également un coffret de dérivation 26. Par ailleurs, il est possible d'ajouter un autre dispositif de dérivation 14 au niveau d'un bloc de jonction 15 suivant une direction perpendiculaire à l'axe longitudinal 30 des éléments de transport 10, en allongeant les plaques 17 dans cette direction. Un bloc de jonction 15 peut alors comporter deux dispositifs de dérivation 14 situés de part et d'autre de cet axe longitudinal 30 comme indiqué en figure 1.

L'ensemble du bloc de jonction 15 et du dispositif de dérivation 14 est serré par des moyens de serrage, constitué par exemple plusieurs vis de serrage 16a,16b avec rondelles élastiques, suffisants pour assurer une bonne connexion électrique entre les conducteurs 11, les plaques conductrices 17,18a,18b et les conducteurs 21. Ainsi dans ce premier mode de réalisation, les plaques conductrices 17,18a,18b peuvent avantageusement réaliser simultanément un ou plusieurs dispositifs de dérivation 14 ainsi qu'un éclissage entre deux éléments de transport 10 adjacents. Cependant, ce mode de réalisation offre moins de souplesse pour la mise en place des dérivations, puisque celles-ci soit sont réalisées au moment de l'éclissage entre éléments de transport 10 soit nécessitent une intervention sur les éléments de transport 10.

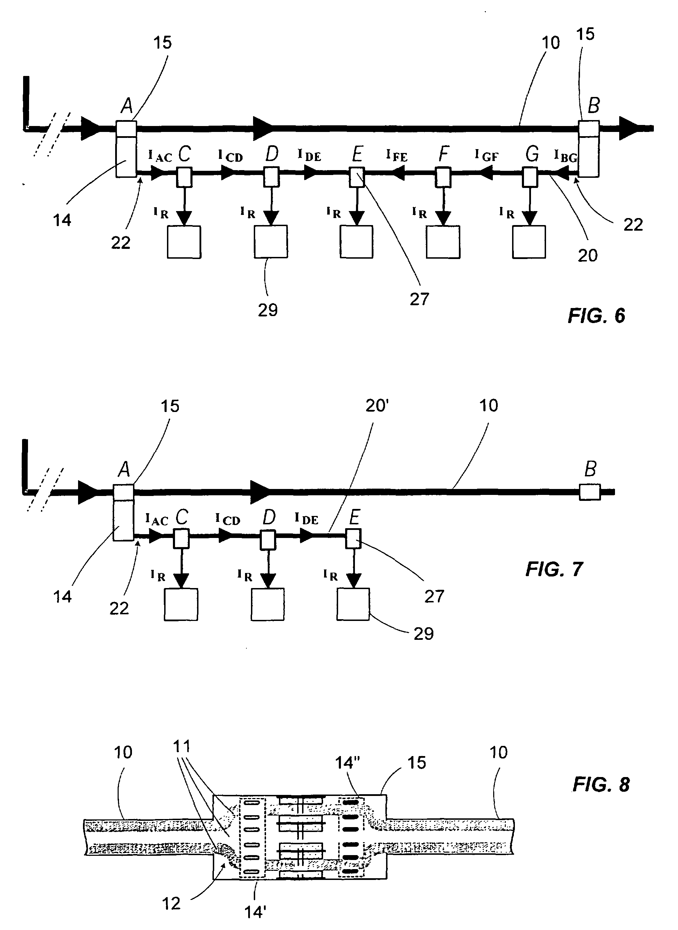

Selon un autre mode de réalisation présenté à la figure 8, un bloc de jonction 15 comporte de façon séparée un éclissage entre deux éléments de transport 10 et un ou plusieurs dispositifs de dérivation 14. Dans ce mode, les dispositifs de dérivation 14 sont constitués, par exemple, par des trappes de dérivation selon un modèle connu permettant éventuellement des connexions de type "plug-in". La figure 8 montre un exemple dans lequel un bloc de jonction 15 comporte, en plus d'un éclissage, une première trappe de dérivation 14' dirigée dans une direction et une deuxième trappe de dérivation 14" dirigée dans une direction opposée. Les trappes de dérivation 14',14" peuvent accueillir des éléments de distribution 20,20' mais aussi des coffrets de dérivation 26.

Ainsi, grâce à ce mode de réalisation, les éléments de distribution 20 peuvent être mis en place ou enlevés sans intervention sur les éléments de transport 10, ce qui simplifie l'installation du système décrit dans l'invention. De plus, cette solution permet d'utiliser des éclissages standards et des connexions de dérivation de type "plug-in". Elle nécessite néanmoins de réaliser aux extrémités des conducteurs de transport 11 un épanouissement sur une plus grande longueur. Cet épanouissement des conducteurs de transport 11 engendre une distance D entre deux conducteurs 11 adjacents. La valeur de cette distance D est choisie de façon à être sensiblement égale à l'écartement existant entre les conducteurs 21 des éléments de distribution 20,20', de façon à pouvoir utiliser des trappes de dérivation 14',14".

Il est évident que les éléments de transport 10 et de distribution 20 peuvent, de façon équivalente, comporter un nombre de conducteurs de transport 11 et de distribution 21 différent de trois (en particulier quatre conducteurs pour véhiculer trois phases et un neutre).

L'alimentation électrique d'un tel système de transport et de distribution d'énergie électrique est assurée par une source d'alimentation externe (par exemple un transformateur) non représentée et raccordée à une extrémité d'un des éléments de transport 10, avec des moyens de protection adaptés 31.

Une canalisation électrique préfabriquée est caractérisée par différents paramètres tels que :
- le courant nominal I_{N},
- la résistance globale R des conducteurs,
- la réactance X des conducteurs pour une fréquence d'emploi donnée,
- l'impédance Z = √(R²+X²).

La résistance R est représentative de l'ensemble des pertes électriques totales P_{T} dissipées dans la canalisation. Cette résistance R est déduite par calcul à partir d'une mesure de ces pertes totales selon la formule : R = P_{T}/I_{N}².

En courant alternatif, les pertes électriques totales P_{T} dans les conducteurs d'une canalisation incluent non seulement les pertes liées à la résistance pure des conducteurs, fonction de la résistivité du matériau employé et corrigées des effets de peau et effets de proximité auxquels sont soumis les conducteurs, mais aussi notamment les pertes liées aux variations de l'induction B induisant des pertes par hystérésis dans l'enveloppe métallique et des pertes par courants de Foucault dans les matériaux conducteurs. L'ensemble de ces pertes varie sensiblement suivant que l'on utilise une technologie avec des conducteurs plaqués les uns contre les autres ou des conducteurs espacés les uns des autres. On constate ainsi que la résistance, la réactance et donc l'impédance des conducteurs sont beaucoup plus faibles dans la technologie à conducteurs plaqués que dans la technologie à conducteurs espacés. De ce fait, les éléments de transport 10, dont les conducteurs sont plaqués, génèrent globalement moins de pertes électriques que les éléments de distribution 20,20', dont les conducteurs sont espacés. Il en est de même pour les chutes de tension en ligne et ce en particulier lorsque le facteur de puissance de l'installation est faible. De plus, il a déjà été signalé au début de l'exposé que la technologie à conducteurs plaqués permet une meilleure dissipation de la chaleur avec l'extérieur.

Les figures 6 et 7 vont permettre, par un exemple d'illustration, de mieux comprendre la répartition des courants dans les éléments de distribution 20, 20'. Dans la figure 6, un élément de distribution 20 est raccordé par ses deux extrémités aux points A et B d'un élément de transport 10, via deux blocs de jonction 15 comportant chacun un dispositif de dérivation 14. L'élément de distribution 20 alimente cinq récepteurs 29 supposés identiques dans cet exemple et consommant chacun un courant I_{R}. Les cinq récepteurs 29 sont raccordés à des points de connexion C, D, E, F et G, correspondants à des boîtiers de dérivation 27 répartis sur l'élément 20. Dans la figure 7, un élément de distribution 20' est raccordé par une seule de ses deux extrémités au point A d'un élément de transport 10, via un dispositif de dérivation 14. L'élément de distribution 20' alimente trois récepteurs 29 supposés identiques dans cet exemple et consommant chacun un courant I_{R}. Les trois récepteurs 29 sont raccordés à des points de connexion C, D et E, correspondants à des boîtiers de dérivation 27 répartis sur l'élément 20'.

Quand un élément de distribution 20 de résistance R est parcouru uniformément par un courant nominal appelé I_{N}, les pertes totales P_{T} autorisées sont égales à R * I_{N}². Lorsqu'un tel courant nominal I_{N} parcourt uniformément un élément de distribution, cela correspond à une élévation de température amenant cet élément de distribution 20 à une température limite de fonctionnement autorisée notée Θ.

L'impédance d'un élément de distribution 20 est bien supérieure à l'impédance d'un élément de transport 10 car d'une part les éléments de transport 10 sont en technologie à conducteurs plaqués et d'autre part la section des conducteurs 21 d'un élément de distribution 20 est inférieure à la section des conducteurs 11 d'un élément de transport 10. Ainsi lorsqu'un élément de distribution 20 est monté en dérivation d'un élément de transport 10 comme indiqué en figure 6 et vu qu'il n'y a pratiquement pas de chute de tension entre A et B, l'élément de distribution 20 est donc traversé principalement par le courant correspondant aux récepteurs 29 qui lui sont raccordés. De plus, comme l'élément de distribution 20 est raccordé à ses deux extrémités, ce courant se répartit de part et d'autre de l'élément de distribution 20. Ainsi, le courant I_{R} consommé par le récepteur 29 raccordé au point E provient de façon sensiblement identique des tronçons DE et FE. Donc le courant I_{DE}, circulant dans le tronçon situé entre les points D et E, est identique au courant I_{FE}, circulant entre les points F et E, et est égal à : I_{R}/2. De même, le courant I_{CD}, circulant entre les points C et D, est identique au courant I_{GF}, circulant entre les points G et F, et est égal à I_{R} + I_{DE}, soit : 3/2*I_{R}. De même, le courant I_{AC}, circulant entre les points A et C, est identique au courant I_{BG}, circulant entre les points B et G, et est égal à I_{R} + I_{CD}, soit : 5/2 *I_{R}. On voit ainsi que les pertes résultantes sont différentes dans chacun des tronçons de l'élément de distribution 20.

Cependant, compte tenu de la bonne conductibilité thermique des conducteurs utilisés (cuivre ou aluminium), on peut prendre l'hypothèse que la température reste sensiblement homogène sur l'ensemble de l'élément de distribution 20. De ce fait, on peut déterminer un courant maximum consommé I_{M} = ΣI_{R} (= 5 *I_{R} dans l'exemple), calculé de façon à ne pas dépasser la température limite de fonctionnement autorisée Θ, correspondant aux pertes totales P_{T}. En supposant une répartition régulière des cinq points de connexion C, D, E, F, G le long de l'élément de distribution 20, on obtient alors une valeur maximum I_{M} de l'ordre de : 3,2*I_{N}.

Dans l'exemple de la figure 7, le raisonnement est identique. L'élément de distribution 20' est traversé uniquement par le courant correspondant aux trois récepteurs 29 qui lui sont raccordés. Ainsi, le courant I_{DE}, circulant entre les points D et E, est égal à : I_{R}. De même, le courant I_{CD}, circulant entre les points C et D, est égal à I_{R} + I_{DE}, soit : 2 * I_{R}, et le courant I_{AC}, circulant entre les points A et C, est égal à I_{R} + I_{CD}, soit : 3 *I_{R}. Les pertes résultantes sont là aussi très différentes dans chaque tronçon de l'élément de distribution 20'. Compte tenu de la bonne conductibilité thermique des conducteurs utilisés (cuivre ou aluminium), on peut prendre l'hypothèse que la température reste sensiblement homogène sur l'ensemble de l'élément de distribution 20'. De ce fait, on peut déterminer un courant maximum consommé I_{M} = Σ I_{R} (= 3 * I_{R} dans l'exemple), calculé pour ne pas dépasser la température limite de fonctionnement autorisée Θ, correspondant aux pertes totales P_{T}. En supposant une répartition régulière des trois points de connexion C, D, E le long de l'élément de distribution 20', on obtient alors une valeur maximum I_{M} de l'ordre de : 1,5 * I_{N}.

Par conséquent, dans les deux exemples, on peut accepter que la somme des courants consommés par des récepteurs 29 raccordés à un élément de distribution 20,20' soit bien supérieure au courant nominal I_{N} qui serait acceptable sur toute la longueur de cet élément de distribution 20,20', sans dépasser la température limite de fonctionnement autorisée Θ. Ceci est obtenu d'une part grâce aux technologies différentes employées pour les éléments de transport 10 et de distribution 20,20', et d'autre part grâce à une limitation du nombre et du calibre des boîtiers de dérivation 27 et à une répartition de ces boîtiers le long d'un élément de transport 20,20'. L'intérêt est de donner à l'utilisateur l'opportunité d'optimiser avantageusement le calibre de ses éléments de distribution 20,20' par rapport aux courants consommés en aval. Ainsi, dans un système conforme à l'invention, un élément de distribution 20 de courant nominal I_{N} égal à 630A pourra alimenter jusqu'à cinq récepteurs 29 répartis consommant 400A chacun, s'il est raccordé à ses deux extrémités à un élément de transport 10. De même un élément de distribution 20' de courant nominal I_{N} égal à 500A et raccordé qu'à une seule extrémité, pourra alimenter jusqu'à trois récepteurs 29 répartis consommant 250A chacun.

La limitation du nombre de boîtiers de dérivation 27 est obtenue par construction en limitant le nombre de trappes de dérivation 25 intégrées dans un élément de distribution 20,20' et la limitation du calibre des boîtiers de dérivation 27 susceptibles d'être installés sur ces trappes de dérivation 25, est obtenue par exemple à l'aide d'un détrompage mécanique classique empêchant le raccordement de boîtiers de dérivation 27 non autorisés.

Il en résulte que dans une installation possédant un système tel que décrit dans la présente invention, c'est-à-dire constitué d'un ou plusieurs éléments de distribution 20,20' montés en dérivation d'éléments de transport 10, la plus grande partie du courant de ligne passe dans les éléments de transport 10. De plus, bien que la section des conducteurs de distribution 21 soit inférieure à la section des conducteurs de transport 11, il n'est pas nécessaire de rajouter des moyens de protection électrique contre les surcharges en courant entre les éléments de transport 10 et les éléments de distribution 20,20'.

Ainsi on obtient un système de transport et de distribution d'énergie électrique performant et simple puisque d'une part la fonction transport de l'énergie électrique est optimisée par l'utilisation d'éléments de transport 10 standards à conducteurs plaqués et donc favorisant les échanges thermiques avec l'extérieur et diminuant les pertes globales, et d'autre part la fonction distribution de l'énergie électrique est simplifiée par l'utilisation d'éléments de distribution 20,20' standards à conducteurs espacés facilitant les connexions de type "plug-in" pour les boîtiers de dérivation 27.

Pour l'utilisateur, la démarche à adopter pour mettre en place un tel système de transport et de distribution peut, par exemple, être la suivante : d'abord mettre en énergie la surface à alimenter c'est-à-dire installer les éléments de transport 10 le long des bâtiments, puis en fonction des besoins réels, installer de façon répartie les éléments de distribution 20,20' et/ou les coffrets de distribution 26 uniquement dans les zones utiles des bâtiments optimisant ainsi le coût global de l'installation.

Enfin, pour des éléments de transport 10 de longueur L_{T}, on peut envisager des éléments de distribution 20, raccordés à leurs deux extrémités 22 à un dispositif de dérivation 14, d'une longueur soit égale à L_{T} selon un mode de réalisation préféré, soit égale à un multiple de L_{T}, par exemple 2 * L_{T} comme le montre la figure 4. Par contre, les éléments de distribution 20', qui ne sont raccordés qu'à une seule extrémité 22, sont préférentiellement d'une longueur de l'ordre de L_{T}/2.

Il est bien entendu que l'on peut, sans sortir du cadre de l'invention, imaginer d'autres variantes et perfectionnements de détail et de même envisager l'emploi de moyens équivalents.

## Revendications

1. Système de transport et de distribution d'énergie électrique comprenant :
- plusieurs éléments de transport (10) de longueur (L_{T}), possédant chacun plusieurs conducteurs de transport (11) parallèles, isolés et plaqués les uns contre les autres, chaque extrémité de ces éléments de transport (10) présentant un épanouissement (12) des conducteurs de transport (11) pour connecter deux éléments de transport (10) adjacents au moyen d'un bloc de jonction (15),
- au moins un élément de distribution (20,20') possédant plusieurs conducteurs de distribution (21) parallèles et espacés les uns des autres, dont au moins une des deux extrémités (22) est directement connectée à un élément de transport (10) par un dispositif de dérivation (14) au niveau d'un bloc de jonction (15), sans adjonction de moyens de protection électrique contre les surcharges en courant,
**caractérisé en ce que** la section des conducteurs de distribution (21) est inférieure à la section des conducteurs de transport (11), et **en ce qu'**un nombre limité de trappes de dérivation (25), espacées par des intervalles (L_{D}), sont aménagées le long des éléments de distribution (20,20'), permettant d'installer des boîtiers de dérivation (27) par des connexions de type "plug-in", c'est-à-dire autorisant la pose et la dépose des boîtiers de dérivation (27) sans couper l'alimentation électrique du système de transport et de distribution.

2. Système de transport et de distribution d'énergie électrique selon la revendication 1, **caractérisé par le fait que** les deux extrémités (22) d'un élément de distribution (20) sont directement connectées par des dispositifs de dérivation (14) à des éléments de transport (10), sans adjonction de moyens de protection électrique contre les surcharges en courant.

3. Système de transport et de distribution d'énergie électrique selon la revendication 1, **caractérisé par le fait que** seulement une des deux extrémités (22) d'un élément de distribution (20') est directement connectée par un dispositif de dérivation (14) à un élément de transport (10), sans adjonction de moyens de protection électrique contre les surcharges en courant.

4. Système de transport et de distribution d'énergie électrique selon l'une des revendications 1 à 3, **caractérisé par le fait que** l'intervalle (L_{D}) entre deux trappes de dérivation (25) est inférieur à la longueur (L_{T}) d'un élément de transport (10).

5. Système de transport et de distribution d'énergie électrique selon l'une des revendications 1 à 3, **caractérisé par le fait que** la somme des courants consommés par des récepteurs (29) raccordés à des boîtiers de dérivation (27) d'un élément de distribution (20,20') peut être supérieure au courant nominal (I_{N}) parcourant uniformément la longueur d'un élément de distribution (20,20').

6. Système de transport et de distribution d'énergie électrique selon l'une des revendications précédentes, **caractérisé par le fait qu'**un coffret de dérivation (26), muni de ses propres moyens de protection électrique, peut également être connecté à un dispositif de dérivation (14) d'un élément de transport (10).

7. Système de transport et de distribution d'énergie électrique selon l'une des revendications 1 à 3, **caractérisé par le fait que** l'épanouissement à chaque extrémité (12) entre les différents conducteurs de transport (11) des éléments de transport (10) est d'une valeur (D) sensiblement identique à l'espacement entre les conducteurs de distribution (21).

8. Système de transport et de distribution d'énergie électrique selon la revendication 7, **caractérisé par le fait qu'**un bloc de jonction (15) comporte des plaques conductrices (17,18a,18b) permettant de réaliser simultanément au moins un dispositif de dérivation (14) ainsi qu'un éclissage entre deux éléments de transport (10) adjacents.

9. Système de transport et de distribution d'énergie électrique selon la revendication 8, **caractérisé par le fait que** chaque dispositif de dérivation (14) dispose de deux emplacements de dérivation (23) disponibles, chaque emplacement pouvant accueillir une extrémité (22) d'un élément de distribution (20,20') ou un coffret de dérivation (26).

10. Système de transport et de distribution d'énergie électrique selon l'une des revendications précédentes, **caractérisé par le fait qu'**un bloc de jonction (15) peut comporter deux dispositifs de dérivation (14).

## Claims

1. An electric power transmission and distribution system including:
- several transmission components (10) of length (L_{T}), each having several parallel, insulated transmission conductors (11) laid against each other, each end of these transmission components (10) having an opening out (12) of the transmission conductors (11) to connect two adjacent transmission components (10) by means of a terminal block (15),
- at least one distribution component (20,20') having several parallel distribution conductors (21) spaced apart from each other, one at least of the two ends (22) of which is directly connected to a transmission component (10) by a tap-off device (14) at terminal block (15) level, with no additional means of electrical protection against current overloads,
**characterised in that** the cross-section of the distribution conductors (21) is smaller than the cross-section of the transmission conductors (11), and a limited number of tap-off points (25), spaced out at intervals (L_{D}), are provided along the distribution components (20,20'), allowing tap-off junctions to be installed by "plug-in" type connections, in other words allowing tap-off junctions (27) to be installed or removed without cutting off the electricity supply in the transmission and distribution system.

2. Electric power transmission and distribution system according to claim 1, **characterised in that** the two ends (22) of a distribution component (20) are directly connected by tap-off devices (14) to transmission components (10), with no additional means of electrical protection against current overloads.

3. Electric power transmission and distribution system according to claim 1, **characterised in that** only one of the two ends (22) of a distribution component (20') is directly connected by a tap-off device (14) to a transmission component (10), with no additional means of electrical protection against current overloads.

4. Electric power transmission and distribution system according to one of claims 1 to 3, **characterised in that** the gap (L_{D}) between two tap-off points (25) is smaller than the length (L_{T}) of a transmission component (10).

5. Electric power transmission and distribution system according to one of claims 1 to 3, **characterised in that** the total current consumption of receivers (29) connected to tap-off junctions (27) of a distribution component (20,20') may be greater than the rated current (IN) passing uniformly through the length of a distribution component (20,20').

6. Electric power transmission and distribution system according to one of the preceding claims, **characterised in that** a tap-off unit (26), fitted with its own electrical protection means, may also be connected to a tap-off device (14) of a transmission component (10).

7. Electric power transmission and distribution system according to one of claims 1 to 3, **characterised in that** the opening out at each end (12) between the different transmission conductors (11) of the transmission components (10) is of a value (D) approximately identical to the gap between the distribution conductors (21).

8. Electric power transmission and distribution system according to claim 7, **characterised in that** a terminal block (15) comprises conductive plates (17,18a,18b) allowing at least one tap-off device (14) and one jointing unit between two adjacent transmission components (10) to be made simultaneously.

9. Electric power transmission and distribution system according to claim 8, **characterised in that** each tap-off device (14) has two available tap-off locations (23), each location being able to receive one end (22) of a distribution component (20,20') or a tap-off unit (26).

10. Electric power transmission and distribution system according to one of the preceding claims, **characterised in that** a terminal block (15) may comprise two tap-off devices (14).

## Patentansprüche

1. Verteilungs- und Transportsystem für elektrische Energie, Folgendes aufweisend:
- mehrere Transportelemente (10) mit Länge (L_{T}) , die jedes mehrere parallele isolierte und aneinander gedrückte Transportleiter (11) besitzen, wobei jedes Ende dieser Transportelemente (10) eine Ausbauchung (12) der Transportleiter (11) aufweist, um zwei nebeneinander liegende Transportelemente (10) mittels einer Reihenklemme (15) zu verbinden,
- mindestens ein Verteilungselement (20, 20'), das mehrere Verteilungsleiter (21) aufweist, die parallel und voneinander beabstandet sind, wobei mindestens eines dieser zwei Enden (22) direkt mit einem Transportelement (10) durch eine Abzweigvorrichtung (14) auf dem Niveau einer Reihenklemme (15) ohne Hinzufügen von elektrischen Schutzmitteln gegen Überstromlasten verbunden ist,
**dadurch gekennzeichnet, dass** der Querschnitt der Verteilungsleiter (21) kleiner ist als der Querschnitt der Transportleiter (11), und dass eine beschränkte Anzahl von Abzweigklappen (25), die von Intervallen (L_{D}) beabstandet sind, entlang der Verteilungselemente (20, 20') eingerichtet sind und es ermöglichen, Abzweiggehäuse (27) durch Anschlüsse des Typs "plug-in" zu installieren, das heißt solche, die das Anbringen und Abnehmen der Abzweiggehäuse (27) ohne Unterbrechen der Stromversorgung des Transport- und Verteilungssystems erlauben.

2. Transport- und Verteilungssystem für elektrische Energie nach Anspruch 1, **dadurch gekennzeichnet, dass** die zwei Enden (22) eines Verteilungselements (20) direkt durch Abzweigvorrichtungen (14) mit Transportelementen (10) ohne Hinzufügen von elektrischen Schutzmitteln gegen Überstromlasten verbunden sind.

3. Transport- und Verteilungssystem für elektrische Energie nach Anspruch 1, **dadurch gekennzeichnet, dass** nur eines der zwei Enden (22) eines Verteilungselements (20') direkt mit einer Abzweigvorrichtung (14) mit einem Transportelement (10) ohne Hinzufügen von elektrischen Schutzmitteln gegen Überstromlasten verbunden ist.

4. Transport- und Verteilungssystem für elektrische Energie nach einem der Ansprüche 1 bis 3, **dadurch gekennzeichnet, dass** das Intervall (L_{D}) zwischen zwei Abzweigklappen (25) kleiner ist als die Länge (L_{T}) eines Transportelements (10).

5. Transport- und Verteilungssystem für elektrische Energie nach einem der Ansprüche 1 bis 3, **dadurch gekennzeichnet, dass** die Summe der von den Empfängern (29), die an Abzweiggehäuse (27) eines Verteilungselements (20, 20') angeschlossen sind, verbrauchten Ströme größer sein kann als der Nennstrom (IN), der gleichmäßig die Länge eines Verteilungselementes (20, 20') durchläuft.

6. Transport- und Verteilungssystem für elektrische Energie nach einem der vorhergehenden Ansprüche, **dadurch gekennzeichnet, dass** ein Abzweiggehäuse (26), das mit seinen eigenen elektrischen Schutzmitteln versehen ist, auch an eine Abzweigvorrichtung (14) eines Transportelements (10) angeschlossen werden kann.

7. Transport- und Verteilungssystem für elektrische Energie nach einem der Ansprüche 1 bis 3, **dadurch gekennzeichnet, dass** das Ausbauchen an jedem Ende (12) zwischen den verschiedenen Transportleitern (11) der Transportelemente (10) einen Wert (D) hat, der im Wesentlichen gleich der Beabstandung zwischen den Verteilungsleitern (21) ist.

8. Transport- und Verteilungssystem für elektrische Energie nach Anspruch 7, **dadurch gekennzeichnet, dass** eine Reihenklemme (15) leitende Platten (17, 18a, 18b) aufweist, die es erlauben, gleichzeitig mindestens eine Abzweigvorrichtung (14) sowie eine Schienenverbindung zwischen zwei nebeneinander liegenden Transportelementen (10) herzustellen.

9. Transport- und Verteilungssystem für elektrische Energie nach Anspruch 8, **dadurch gekennzeichnet, dass** jede Abzweigvorrichtung (14) über zwei verfügbare Abzweigstellen (23) verfügt, wobei jede Stelle ein Ende (22) eines Verteilungselements (20, 20') oder ein Abzweiggehäuse (26) aufnehmen kann.

10. Transport- und Verteilungssystem für elektrische Energie nach einem der vorhergehenden Ansprüche, **dadurch gekennzeichnet, dass** eine Reihenklemme (15) zwei Abzweigvorrichtungen (14) aufweisen kann.
